# EUROPÄISCHE PATENTSCHRIFT

(11) **EP 3 235 605 B1**
(45) Veröffentlichungstag und Bekanntmachung des Hinweises auf die Patenterteilung: **31.10.2018**
(21) Anmeldenummer: 17161066.0
(22) Anmeldetag: 15.03.2017
(51) Int. Cl.: B25H 1/02

(54) **MONTAGEARBEITSPLATZ MIT POSITIONSBESTIMMUNGSVORRICHTUNG**
ASSEMBLY WORKSTATION WITH POSITION DETERMINATION DEVICE
POSTE DE MONTAGE COMPRENANT UN DISPOSITIF DE DÉTERMINATION DE POSITION

(30) Priorität: 19.04.2016 DE 102016206529
(43) Veröffentlichungstag der Anmeldung: 25.10.2017
(73) Patentinhaber: Robert Bosch GmbH, 70442 Stuttgart (DE)
(72) Erfinder: Nowak, Rene, 70469 Stuttgart (DE)
(74) Vertreter: Maiß, Harald

(56) Entgegenhaltungen:
- EP-A1- 1 645 921
- EP-A1- 2 716 578
- DE-A1-102013 220 107
- US-A1- 2008 121 168

## Beschreibung

Die Erfindung betrifft ein Verfahren zum Einrichten eines Montagearbeitsplatzes, einen entsprechenden Montagearbeitsplatz und ein Verfahren zum Betrieb dieses Montagearbeitsplatzes.

Ein gattungsgemäßer Montagearbeitsplatz weist mehrere Behälteraufnahmevorrichtungen auf, welche zur Aufnahme von jeweils zumindest einem zugeordneten Materialbehälter ausgebildet sind, wobei eine erste Positionsbestimmungsvorrichtung vorgesehen ist, mit welcher die Position einer Hand eines Werkers oder einer mit der genannten Hand verbindbaren Markierung ermittelbar ist, wobei die erste Positionsbestimmungsvorrichtung an eine Steuervorrichtung angeschlossen ist. Ein entsprechender Montagearbeitsplatz ist aus der EP 2 716 578 A1 oder der DE 10 2013 220 107 A1 bekannt.

Ein Vorteil der vorliegenden Erfindung besteht darin, dass die Inbetriebnahme des Montagearbeitsplatzes besonders einfach, intuitiv und zeitsparend ist.

Gemäß Anspruch 1 wird ein Verfahren zum Einrichten des gattungsgemäßen Montagearbeitsplatzes vorgeschlagen, wobei mehrere Behälteraufnahmevorrichtungen mit einem ersten Datenträger versehen sind , wobei mehrere Materialbehälter mit einem zweiten Datenträger versehen sind, wobei das Verfahren folgende Schritte umfasst, welche in beliebiger Reihenfolge ausgeführt werden:
a) Berühren eines Referenzpunktes an einer Behälteraufnahmevorrichtung mit der Hand des Werkers und Erfassen einer entsprechenden Referenzposition mit der ersten Positionsbestimmungsvorrichtung ;
b) Auslesen von ersten Daten aus dem dem Referenzpunkt zugeordneten ersten Datenträger und
c) Auslesen von zweiten Daten aus dem dem Referenzpunkt zugeordneten zweiten Datenträger;
wobei die Referenzposition, die ersten und die zweiten Daten gespeichert werden.

Vorzugsweise sind alle Behälteraufnahmevorrichtungen mit einem ersten Datenträger versehen, wobei alle Materialbehälter mit einem zweiten Datenträger versehen sind. Vorzugsweise ist zumindest in einem Teil der Behälteraufnahmevorrichtungen jeweils zumindest ein entsprechender Materialbehälter aufgenommen. Bei dem ersten und/oder dem zweiten Datenträger kann es sich beispielsweise um einen Barcode, um einen QR-Code, um ein RFID-Tag oder um ein NFC-Tag handeln. Der Montagearbeitsplatz umfasst vorzugsweise eine Lesevorrichtung, mit welcher der erste und/oder der zweite Datenträger auslesbar sind und welche drahtgebunden oder drahtlos an die Steuervorrichtung anschließbar ist. Zusätzlich zur ersten Positionsbestimmungsvorrichtung kann eine gesonderte zweite Positionsbestimmungsvorrichtung vorhanden sein, mit der beispielsweise die Position eines elektrisch angetriebenen Handschraubers oder eines anderen Werkzeugs bestimmt werden kann. Die erste und/oder die zweite
Positionsbestimmungsvorrichtung können beispielsweise entsprechend der US 2009/228841 A1 oder der DE 10 2010 034 151 A1 oder der US 6198485 B1 ausgebildet sein. Bei der ersten und der zweiten Positionsbestimmungsvorrichtung kommen vorzugsweise unterschiedliche Positionsbestimmungsverfahren zum Einsatz. Die Referenzposition, die ersten und die zweiten Daten werden vorzugsweise in der Steuervorrichtung gespeichert.

In den abhängigen Ansprüchen sind vorteilhafte Weiterbildungen und Verbesserungen der Erfindung angegeben.

Es kann vorgesehen sein, dass das Verfahren für alle Behälteraufnahmevorrichtungen durchgeführt wird, in welchen zumindest ein Materialbehälter aufgenommen ist. Damit verbleiben keine Materialbehälter, für die ein aufwändiger weiterer Einrichtvorgang durchgeführt werden muss.

Es kann vorgesehen sein, dass die Referenzposition, die ersten und die zweiten Daten derart in einem gemeinsamen Datensatz gespeichert werden, dass sie zusammen auswertbar sind. Hierbei ist in erster Linie an die Durchführung der Verfahren nach Anspruch 10 und/oder 11 gedacht. Dabei wird vorzugsweise die räumliche bzw. dreidimensionale Ausdehnung der betreffenden Materialbehälter bzw. der betreffenden Projektionsfläche ermittelt, höchst vorzugsweise unter Verwendung der zugeordneten Referenzposition und der zugeordneten ersten und zweiten Daten. Bei der Bestimmung der genannten räumlichen Ausdehnungen können weitere Daten verwendeten werden, die unabhängig von der vorliegenden Konfiguration bzw. Einstellung des Montagearbeitsplatzes sind. Beispielsweise kann eine Tabelle Verwendung finden, in dem zu jedem verfügbaren Typ von Materialbehälter dessen Abmessungen gespeichert sind. Weiter kann eine Tabelle Verwendung finden in dem zu jedem verfügbaren Typ von Einzelteil gespeichert ist, in welchem Behältertyp dies aufbewahrt wird.

Schutz wird außerdem für einen Montagearbeitsplatz nach Anspruch 4 beansprucht, bei dem die Steuervorrichtung zur Ausführung eines erfindungsgemäßen Verfahrens eingerichtet ist.

Es kann vorgesehen sein, dass zumindest ein Teil der Behälteraufnahmevorrichtungen jeweils eine erste und eine zweite Behälterlaufbahn aufweist, welche parallel zueinander angeordnet sind, wobei deren Abstand verstellbar ist, wobei im ersten und/oder im zweiten Datenträger eine Information gespeichert ist, aus der der Abstand zwischen der ersten und der zweiten Behälterlaufbahn ableitbar ist. Der Abstand der Behälterlaufbahnen wird vorzugsweise passend für den jeweils zugeordneten Typ von Materialbehälter eingestellt. Vorzugsweise enthält der zweite Datenträger eine Information über den Typ des zugeordneten Materialbehälters. Höchst vorzugsweise hat die Steuervorrichtung Zugriff auf eine Tabelle, in welche zu jedem verfügbaren Typ von Materialbehälter der erforderliche Abstand der Behälterlaufbahnen gespeichert ist. Die genannte Tabelle kann unmittelbar in der Steuervorrichtung gespeichert sein. Sie kann aber auch über eine Netzwerkverbindung von einem weiteren Rechner abrufbar sein. Vorzugsweise enthält der zweite Datenträger eine Information über die in dem Materialbehälter aufgenommenen Einzelteile. Bei der ersten und der zweiten Behälterlaufbahn handelt es sich vorzugweise jeweils um eine Rollenbahn mit einer Vielzahl von drehbaren Rollen, auf welcher die Materialbehälter laufen. Es ist aber auch denkbar, die Behälterlaufbahnen Gleitfläche für die Materialbehälter aufweisen. Neben den Behälterlaufbahnen sind auch flache Materialebenen möglich. In diesem Fall werden die Boxenpositionen auf der Ebene fixiert. Weiterhin ist es auch auf den Materialebenen möglich, dass die Materialbehälter frei positioniert werden und über die erste und/oder die zweite Positionsbestimmungsvorrichtung erkannt werden und somit ständig nachverfolgt werden.

Es kann vorgesehen sein, dass alle Behälterlaufbahnen parallel zu einer vertikalen Bezugsebene angeordnet sind. Hierdurch ergibt seine eine ergonomisch besonders günstige Greifbewegung für den Werker, wenn er in einen der Materialbehälter greift. Vorzugsweise ist der Montagearbeitsplatz zum Aufstellen auf einem horizontalen Untergrund eingereicht, also auf einem im Wesentlichen ebenen Untergrund der senkrecht zur Richtung der Schwerkraft ausgerichtet ist. Die genannte Bezugsebene ist dementsprechend parallel zur Richtung der Schwerkraft ausgerichtet.

Es kann wenigstens eine Bildprojektionsvorrichtung vorgesehen sein, wobei an einer dem Werker zugewandten Stirnfläche der ersten Behälterlaufbahn eine Projektionsfläche für ein Bild der Bildprojektionsvorrichtung angeordnet ist. Die Bildprojektionsvorrichtung ist vorzugsweise digital ansteuerbar, wobei sie beispielsweise nach dem LCD-, nach dem DLP- oder nach dem Laser-Prinzip arbeitet. Als Lichtquelle kommen vorzugsweise stromsparende und langlebige LED's zum Einsatz. Vorzugsweise ist die Bildprojektionsvorrichtung so angeordnet und ausgelegt, dass sie auf allen genannten Projektionsflächen ein Bild projizieren kann. Es ist aber auch denkbar, dass mehrere Bildprojektionsvorrichtungen zum Einsatz kommen, insbesondere, wenn der Montagearbeitsplatz viele Behälteraufnahmevorrichtungen aufweist. Die Projektionsfläche wird vorzugsweise von einem Blechbauteil gebildet, welches zu einem Winkel gebogen ist. Die Projektionsfläche ist vorzugsweise mit einer reflektierenden Oberfläche versehen. Die Projektionsfläche ist vorzugsweise lösbar an der ersten Behälterlaufbahn befestigt.

Es kann vorgesehen sein, dass der erste Datenträger an einer dem Werker zugewandten Stirnfläche der zweiten Behälterlaufbahn angeordnet ist. Hierdurch kann der Werker den ersten Datenträger mittels der Lesevorrichtung besonders einfach auslesen.

Es kann wenigstens ein Werkzeug vorgesehen sein, wobei eine zweite Positionsbestimmungsvorrichtung vorgesehen ist, mit welcher der Ort und/oder die Drehlage des Werkezugs ermittelbar ist, wobei die erste und die zweite Positionsbestimmungsvorrichtung unterschiedlich voneinander ausgebildet sind.
Insbesondere ist daran gedacht, dass die erste und die zweite
Positionsbestimmungsvorrichtung nach unterschiedlichen
Positionsbestimmungsverfahren arbeiten. Namentlich ist daran gedacht, dass die erste Positionsbestimmungsvorrichtung optisch arbeitet, ohne dass die Hand des Werkers mit einer Markierung versehen ist. Die zweite Positionsbestimmungsvorrichtung verwendet vorzugsweise ein Verfahren, welches besondere Markierungen an dem Werkzeug verwendet. Höchst vorzugsweise ist mit der zweiten Positionsvorrichtung die Drehlage des Werkzeugs im Raum bestimmbar.

Schutz wird weiter für ein Verfahren zum Betrieb eines erfindungsgemäßen Montagearbeitsplatzes beansprucht, wobei unter Verwendung der ersten Positionsbestimmungsvorrichtung und der gespeicherten Referenzposition und der gespeicherten ersten und zweiten Daten ermittelt wird, ob der Werker mit seiner Hand in den zugeordneten Materialbehälter gegriffen hat oder nicht. Vorzugsweise wird eine für den Werker sichtbare Fehlermeldung angezeigt, wenn in den falschen Materialbehälter gegriffen wurde. Vorzugsweise wird auf einem Bildschirm des Montagearbeitsplatzes eine Montageanleitung angezeigt, wobei der nächste Montageschritt angezeigt wird, wenn der Werker in den korrekten Materialbehälter gegriffen hat. Höchst vorzugsweise erfolgt die automatische Anzeige des nächsten Montageschritts ausschließlich dann, wenn der Werker in den korrekten Materialbehälter gegriffen hat.

Schutz wird weiter für ein Verfahren zum Betrieb eines erfindungsgemäßen Montagearbeitsplatzes beansprucht, wobei mittels der wenigstens einen Bildprojektionsvorrichtung ein vorgegebenes Bild auf eine zugeordnete Projektionsfläche projiziert wird, wobei unter Verwendung der der Projektionsfläche zugeordneten und gespeicherten Referenzposition und der ersten und zweiten Daten ausgehend vom vorgegeben Bild ein verzerrtes Bild ermittelt wird, welches an die Bildprojektionsvorrichtung übermittelt wird. Das verzerrte Bild ist vorzugsweise so ausgelegt, dass auf der Projektionsfläche das vorgegebene Bild für den Werker sichtbar wird, wobei insbesondere Verzerrungen ausgeglichen werden, welche durch eine schräge Anordnung der Projektionsfläche relativ zur Projektionsachse der Bildprojektionsvorrichtung entstehen. Weiter wird bei der genannten Verzerrung dem Umstand Rechnung getragen, dass die Projektionsfläche wesentlich kleiner als das Gesamtbild ist, welches die Bildprojektionsvorrichtung projizieren kann. Das vorgegebene Bild enthält vorzugsweise eine Information über die Anzahl der aus dem zugeordneten Materialbehälter durch den Werker zu entnehmenden Teile, höchst vorzugsweise in Form einer abgebildeten Zahl.

Schutz wird außerdem für einen Montagearbeitsplatz nach Anspruch 12 beansprucht, bei dem die Steuervorrichtung zur Ausführung eines der beiden vorstehenden Verfahren eingerichtet ist.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnungen näher erläutert. Es zeigt:
- Fig. 1: eine perspektivische Darstellung eines erfindungsgemäßen Montagearbeitsplatzes; und
- Fig. 2: eine perspektivische Darstellung der Behälteraufnahmevorrichtungen mit den zugeordneten Materialbehältern.

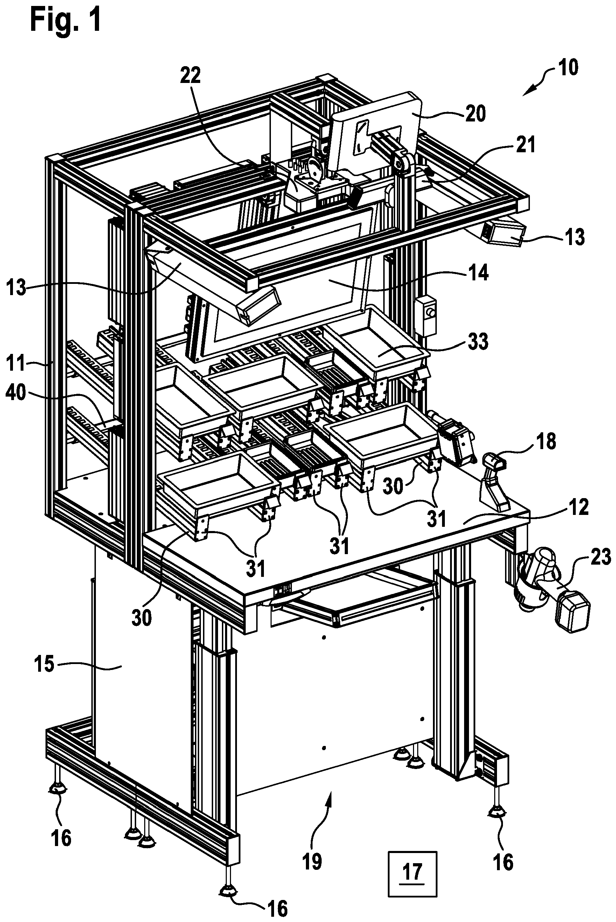

Fig. 1 zeigt eine perspektivische Darstellung eines erfindungsgemäßen Montagearbeitsplatzes 10. Auf dem Montagearbeitsplatz 10 sollen im Rahmen einer Serienfertigung Baugruppen aus Einzelteilen zusammengebaut werden, und zwar von einem Werker per Hand. Der Montagearbeitsplatz ist aufgrund seiner einfachen Umrüstbarkeit aber auch für die Einzelanfertigung von Baugruppen verwendbar. Die Einzelteile werden in Materialbehältern 33 bereitgestellt, welche in Behälteraufnahmevorrichtungen 30 aufgenommen sind. Die Behälteraufnahmevorrichtungen 30 sind auf Halteprofilen 40 derart befestigt, dass ihre Position und/oder ihre Breite einstellbar sind, so dass eine in ergonomischer Hinsicht optimale Anordnung der Materialbehälter gewählt werden kann. Die Halteprofile 40 sind wiederum an einem Gestell 11 befestigt, welches vorliegenden aus Aluminium-Strangpressprofilen zusammengesetzt ist. An dem Gestell 11ist außerdem eine Arbeitsfläche 12 angeordnet, die vorliegend von einer ebenen Platte mit konstanter Dicke gebildet wird. Auf der Arbeitsfläche 12 wird die o.g. Baugruppe zusammengesetzt. Auf der Arbeitsfläche 12 können Hilfsvorrichtungen angeordnet sein, in welcher die Baugruppe aufgenommen ist. Die Höhenlage der Arbeitsfläche 12 ist verstellbar. Das Gestell 12 ist mit mehreren höhenverstellbaren Stellfüßen 16 versehen, so dass es auf einem vorzugsweise horizontalen Untergrund aufgestellt werden kann.

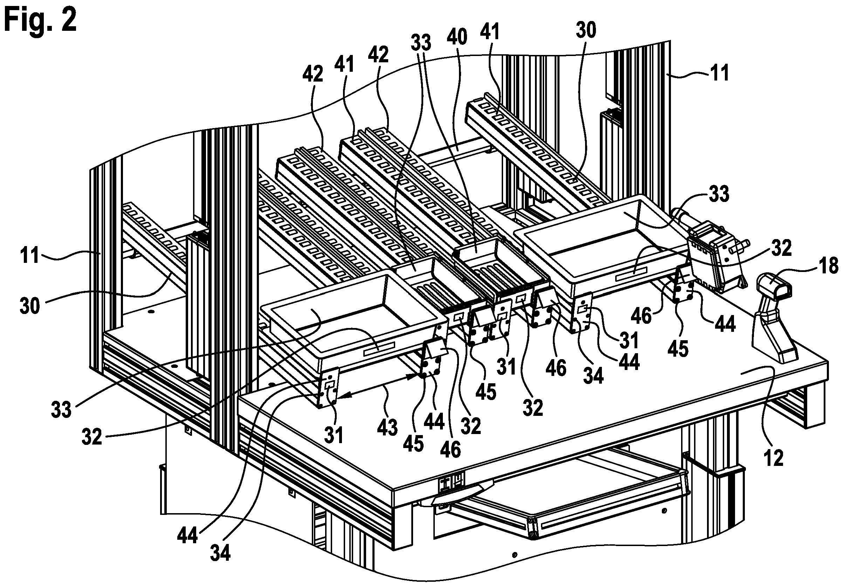

Oberhalb der Arbeitsfläche 12 ist ein Bildschirm 14 angeordnet, welcher an eine Steuervorrichtung 17 angeschlossen ist. Bei der (grobschematisch dargestellten) Steuervorrichtung 17 kann es sich um eine einzige Vorrichtung oder mehrere miteinander vernetzte Teilvorrichtungen handeln. Auf dem Bildschirm 14 werden beispielsweise, die Arbeitsschritte angezeigt, welche der Werker ausführen soll. Weiter ist oberhalb der Arbeitsfläche 12 eine Bildprojektionsvorrichtung 20 angeordnet, welche vorzugsweise digital ansteuerbar ist, wobei sie beispielsweise nach dem LCD-, nach dem DLP- oder nach dem Laser-Prinzip arbeitet. Als Lichtquelle kommen vorzugsweise stromsparende und langlebige LED's zum Einsatz. Die Bildprojektionsvorrichtung 20 ist ebenfalls an die Steuervorrichtung 17 angeschlossen. Mit der Bildprojektionsvorrichtung 20 wird auf die Materialbehälter, aus denen im Rahmen des anstehenden Montagschritts ein Einzelteil zu entnehmen ist, ein Bild projiziert. Die Behälteraufnahmevorrichtungen 30 sind hierfür jeweils mit einer Projektionsfläche (Nr. 46 in Fig. 2) versehen. Das genannte Bild kann eine Zahl enthalten, welche die Anzahl der zu entnehmenden Teile angibt. Es kann beispielsweise einen grünen Hintergrund aufweisen, der dem Werker signalisiert, dass in diesen Materialbehälter zu greifen ist. Der farbliche Hintergrund kann pulsierend zwischen "voller Intensität" und "aus" ausgeführt sein, sodass die Aufmerksamkeit des Werkers verstärkt auf die richtige Position gelenkt wird. Auf die Projektionsflächen der Materialbehälter aus denen kein Teil zu entnehmen ist, kann beispielsweise ein Bild mit einem roten Hintergrund projiziert werden. Je nach Anzahl und Anordnungen der Behälteraufnahmevorrichtungen 30 sind mehrere Bildprojektionsvorrichtungen 20 erforderlich, um alle Projektionsflächen auszuleuchten.

Das Gestell 11 ist mit Leuchten 13 versehen, mit welchen die Arbeitsfläche 12 hell ausgeleuchtet werden kann, so dass der Werker ermüdungsfrei arbeiten kann. Die Bildprojektionsvorrichtung 20 kann in diesem Zusammenhang auch dazu genutzt werden, einzelne Bereiche des Arbeitsplatzes heller auszuleuchten, beispielsweise den Bereich in dem die zu montierende Baugruppe angeordnet ist. Weiter kann die Bildprojektionsvorrichtung 20 dazu genutzt werden, die Stelle der zu montierenden Baugruppe anzuleuchten, an der das nächste Einzelteil eingebaut werden soll. Es ist auch denkbar, dass die Bildprojektionsvorrichtung 20 die Leuchten 13 vollständig ersetzt.

Die Bildprojektionsvorrichtung 20 hat in ihrem Inneren typischerweise eine einzige Bildvorlage, welche projiziert wird und welche beispielsweise von eine DLP- oder einem LCD-Chip gebildet wird. Diese eine Bildvorlage enthält in ggf. verzerrter Form alle Bilder, welche auf die Projektionsflächen projiziert werden sollen. Zur Berechnung der Bildvorlage ist es notwendig, die Anordnung der Projektionsflächen im Raum zu kennen. Ein Vorteil der Erfindung besteht darin, dass diese Positionen nach der mechanischen Einstellung des Montagearbeitsplatzes auf einen neuen Montageprozess besonders einfach ermittelt werden können.

Hierfür sind die Behälteraufnahmevorrichtungen 30 jeweils mit einem ersten Datenträger 31 versehen, wobei die Materialbehälter jeweils mit einem zweiten Datenträger (Nr. 32 in Fig. 2) versehen sind. Bei dem ersten und/oder dem zweiten Datenträger kann es sich beispielsweise um einen Barcode, um einen QR-Code, um ein RFID-Tag oder um ein NFC-Tag handeln. Der Montagearbeitsplatz 10 umfasst zumindest eine Lesevorrichtungen 18 mit welcher die ersten und die zweiten Datenträger 31; 32 auslesbar sind. Die Lesevorrichtung 18 ist drahtgebunden oder drahtlos an die Steuervorrichtung 17 anschließbar bzw. angeschlossen. Der erste Datenträger 31 enthält im einfachsten Fall eine eindeutige erste Kennnummer für die jeweils zugeordnete Behälteraufnahmevorrichtung 30. Der zweite Datenträger enthält im einfachsten Fall eine eindeutige zweite Kennnummer des in dem zugeordneten Materialbehälter aufgenommenen Teiletyps. Vorzugsweise ist in einem Materialbehälter nur ein einziger Typ von Einzelteilen aufgenommen. Weiter enthält der zweite Datenträger im genannten einfachsten Fall eine eindeutige zweite Kennnummer des Bautyps des zugeordneten Materialbehälters. Hierbei ist anzumerken, dass für unterschiedliche große Einzelteile typischerweise unterschiedlich große Materialbehälter verwendet werden, wobei innerhalb einer Fabrik nur eine begrenzte Anzahl an Typen von Materialbehältern Verwendung finden. Die Behälteraufnahmevorrichtungen 30 sind vorzugsweise verstellbar ausbildet, so dass sie an unterschiedliche Typen, insbesondere an unterschiedliche Baugrößen, von Materialbehältern anpassbar sind. Eine entsprechende Verstellung hat Einfluss auf den Ort der Projektionsfläche und auf den Ort an dem der Werker typischerweise in den Materialbehälter greift.

Oberhalb der Arbeitsfläche ist eine erste und gewünschtenfalls eine zweite Positionserkennungsvorrichtung angeordnet. Mit diesen soll einerseits die räumliche Lage einer oder beider Hände des Werkers erfasst werden. Im einfachsten Fall wird jeweils nur der Ort eines Bezugspunkts der jeweiligen Hand erfasst. Es ist aber auch denkbar, die Drehlage der betreffenden Hand zu erfassen. Weiter soll mit der zweiten Positionserkennungsvorrichtung 22 die Position eines Werkzeuges 23, insbesondere eines elektrisch angetriebenen Handschraubers, ermittelt werden. Die Positionserkennung kann auf unterschiedliche Weise geschehen, beispielsweise können die Hand und/oder das Werkzeug 23 mit einem oder mehreren Ultraschallsendern versehen sein, die geeignete Schallsignale aussenden. Die entsprechende, vorliegend die zweite Positionserfassungsvorrichtung 22 misst die Zeit, welche die genannten Schallsignale zu mehreren, vorzugsweise drei Ultraschallempfängen benötigt. Hieraus kann der Ort der Ultraschallsender berechnet werden. Wenn insbesondere das Werkzeug mit mehreren Ultraschallsendern versehen ist, welche relativ zueinander ortsfest angeordnet sind, kann darüber hinaus die Drehlage des Werkzeugs im Raum ermittelt werden. Gleiches gilt für die Hand des Werkers.

Weiter können die erste und/oder die zweite Positionserkennungsvorrichtung optisch arbeiten, beispielsweise in der Art einer Stereokamera, wie dies aus der US 6 198 485 B1 oder der US 7 227 526 B1 bekannt ist. Die Positionserkennung kann durch Einsatz einer sogenannten Tiefenkamera weiter verbessert werden, wie beispielsweise aus der US 2009/228841 A1 bekannt. Dabei ist es auch möglich die Position der Hand des Werkes zu erkennen, ohne dass diese mit einer Markierung versehen werden muss. Die optische Positionserkennung ist genauer und zuverlässiger, wenn das betreffende Objekt mit einer oder mehreren stark reflektierenden Markierungen versehen ist.

Anzumerken ist, dass vorzugsweise alle Behälteraufnahmevorrichtungen 30 parallel zu einer vertikalen Bezugsebene 15 ausgerichtet sind. Die Bezugsebene 15 ist insbesondere parallel zur Richtung der Schwerkraft ausgerichtet. Typischerweise fällt sie wie in Fig. 1 dargestellt mit einer Seitenwand des Gestells 11 zusammen. Durch die genannte Ausrichtung der Behälteraufnahmevorrichtungen 30 ergeben sich für den Werker ergonomisch günstige Greifbewegungen, wenn er in einen Materialbehälter greift.

Fig. 2 zeigt eine perspektivische Darstellung der Behälteraufnahmevorrichtungen 30 mit den zugeordneten Materialbehältern 33. Die Behälteraufnahmevorrichtungen 30 umfassen jeweils eine erste und eine zweite Behälterlaufbahn 41, 42, welche parallel zueinander angeordnet sind, wobei deren Abstand 43 verstellbar ist. Die Behälterlaufbahnen 41; 42 sind derart geneigt angeordnet, dass sich darauf aufgesetzten Materialbehälter 33 durch die Wirkung der Schwerkraft in die vorderste, dem Werker zugewandte Stellung bewegen. Dort sind beide Behälterlaufbahnen 41; 42 jeweils mit einem Endanschlag 44 versehen, der beispielsweise in Form einer ebenen Platte mit konstanter Dicke ausgebildet ist. Die erste Behälterlaufbahn 41 ist definitionsgemäß die Behälterlaufbahn, an welcher die Projektionsfläche 46 angebracht ist. Die Neigung der Projektionsfläche ist so gewählt, dass sie für den Werker gut sichtbar ist, wobei gleichzeitig sichergesellt ist, dass durch die Bildprojektionsvorrichtung (Nr. 20 in Fig. 1) ein Bild auf die Projektionsfläche 46 projiziert werden kann. Die Projektionsfläche 46 wird vorzugsweise von einem Blechbauteil gebildet, welches zu einem Winkel gebogen ist. Die Projektionsfläche 46 ist vorzugsweise mit einer reflektierenden Oberfläche versehen. Die Projektionsfläche ist vorzugsweise lösbar an der ersten Behälterlaufbahn 41 befestigt. Die zweite Behälterlaufbahn 42 ist definitionsgemäß die Rollenahn, an welcher der erste Datenträger 31 angebracht ist. Dieser ist vorzugsweise an der dem Werker zugewandten Seite am betreffenden Endanschlag befestig.

Beim Einrichten des Montagearbeitsplatzes wir ein Einrichtprogramm gestartet, welches in der Steuervorrichtung gespeichert ist und dort ausgeführt wird. Nach einer entsprechenden Aufforderung die beispielsweise auf dem Bildschirm angezeigt wird, berührt der Werker einen Referenzpunkt 34 an einer Behälteraufnahmevorrichtung 30 mit seiner Hand, wobei die erste Positionsbestimmungsvorrichtung eine entsprechende Referenzposition erfasst. Es ist denkbar, dass die Bildprojektionsvorrichtung ausschließlich den Bereich des Montagearbeitsplatzes ausleuchtet, in welchem der Einrichtvorgang aktuell vorgenommen werden soll. Der Referenzpunkt 34 wird beispielsweise von einer vorgegebenen Schraube 45 definiert, mit welcher ein Endanschlag 44 an der zugeordneten Behälterlaufbahn 41; 42 befestigt ist. Der Zeitpunkt zu dem die Referenzposition erfasst werden soll, kann beispielsweise dadurch signalisiert werden, dass die Hand für eine kurze Zeitspanne, beispielsweise zwei Sekunden, unbeweglich an der Referenzposition gehalten wird. Es ist aber auch möglich, dass der Werker mit der anderen Hand einen Taster oder eine virtuelle Schaltfläche betätigt. Eine virtuelle Schaltfläche wird von der Bildprojektionsvorrichtung auf die Arbeitsfläche 12 projiziert, wobei deren Betätigung mit der ersten Positionsbestimmungsvorrichtung erkannt wird.

Nach der Erfassung der Referenzposition führt der Werker die Lesevorrichtung zum ersten Datenträger 31, so dass dessen erste Daten ausgelesen werden. Danach führt der Werker die Lesevorrichtung zum zweiten Datenträger 32, so dass dessen zweite Daten ausgelesen werden. Die Referenzposition, die ersten und die zweiten Daten werden gespeichert, vorzugsweise in der Steuervorrichtung. Die vorstehenden Schritte werden nach entsprechender Aufforderung durch die Steuervorrichtung für alle Behälteraufnahmevorrichtungen 30 wiederholt. Sobald alle Behältervorrichtungen erfasst sind, betätigt der Werker eine Schaltfläche, die beispielsweise auf dem Bildschirm eingeblendet werden, der mit einer berührungsempfindlichen Oberfläche versehen ist. Daraufhin wird das genannte Einrichtprogramm beendet.

Auf die Reihenfolge der Verfahrensschritte beim Einrichten kommt es nicht an. Es ist beispielsweise auch denkbar, dass zuerst alle Referenzpositionen eingelesen werden, wobei anschließend alle ersten Daten eingelesen werden, wobei anschließend alle zweiten Daten eingelesen werden. Bei dieser Vorgehensweise werden in den drei Durchgängen vorzugsweise alle Behälteraufnahmevorrichtungen in der gleichen Reihenfolge abgearbeitet.

### Bezugszeichen

- 10: Montagearbeitsplatz
- 11: Gestell
- 12: Arbeitsfläche
- 13: Leuchte
- 14: Bildschirm
- 15: vertikale Bezugsebene
- 16: Stellfuß
- 17: Steuervorrichtung
- 18: Lesevorrichtung
- 19: Position des Werkers

- 20: Bildprojektionsvorrichtung
- 21: erste Positionsbestimmungsvorrichtung
- 22: zweite Positionsbestimmungsvorrichtung
- 23: Werkzeug (Schrauber)

- 30: Behälteraufnahmevorrichtung
- 31: erster Datenträger
- 32: zweiter Datenträger
- 33: Materialbehälter
- 34: Referenzpunkt

- 40: Halteprofil
- 41: erste Behälterlaufbahn
- 42: zweite Behälterlaufbahn
- 43: Abstand der Behälterlaufbahnen
- 44: Endanschlag
- 45: Schraube
- 46: Projektionsfläche

## Patentansprüche

1. Verfahren zum Einrichten eines Montagearbeitsplatzes (10), wobei der Montagearbeitsplatz (10) mehrere Behälteraufnahmevorrichtungen (30) aufweist, welche zur Aufnahme von jeweils zumindest einem zugeordneten Materialbehälter (33) ausgebildet sind, wobei mehrere Behälteraufnahmevorrichtungen (30) mit einem ersten Datenträger (31) versehen sind, wobei mehrere Materialbehälter (33) mit einem zweiten Datenträger (32) versehen sind, wobei eine erste Positionsbestimmungsvorrichtung (21) vorgesehen ist, mit welcher die Position einer Hand eines Werkers oder einer mit der genannten Hand verbindbaren Markierung ermittelbar ist, wobei die erste Positionsbestimmungsvorrichtung (21) an eine Steuervorrichtung (17) angeschlossen ist, wobei das Verfahren folgende Schritte umfasst, welche in beliebiger Reihenfolge ausgeführt werden:
a) Berühren eines Referenzpunktes (34) an einer Behälteraufnahmevorrichtung (30) mit der Hand des Werkers und Erfassen einer entsprechenden Referenzposition mit der ersten Positionsbestimmungsvorrichtung (21);
b) Auslesen von ersten Daten aus dem dem Referenzpunkt (34) zugeordneten ersten Datenträger (31) und
c) Auslesen von zweiten Daten aus dem dem Referenzpunkt (34) zugeordneten zweiten Datenträger;
wobei die Referenzposition, die ersten und die zweiten Daten gespeichert werden.

2. Verfahren nach Anspruch 1,
wobei das Verfahren für alle Behälteraufnahmevorrichtungen (30) durchgeführt wird, in welchen zumindest ein Materialbehälter (33) aufgenommen ist.

3. Verfahren nach einem der vorstehenden Ansprüche,
wobei die Referenzposition, die ersten und die zweiten Daten derart in einem gemeinsamen Datensatz gespeichert werden, dass sie zusammen auswertbar sind.

4. Montagearbeitsplatz mit mehreren Behälteraufnahmevorrichtungen (30), welche zur Aufnahme von jeweils zumindest eines zugeordneten Materialbehälters (33) ausgebildet sind, wobei jede Behälteraufnahmevorrichtung (30) mit einem ersten Datenträger (31) versehen ist, wobei jeder Materialbehälter (33) mit einem zweiten Datenträger (32) versehen ist, wobei eine erste Positionsbestimmungsvorrichtung (21) vorgesehen ist, mit welcher die Position einer Hand eines Werkers oder einer mit der genannten Hand verbindbaren Markierung ermittelbar ist, wobei die erste Positionsbestimmungsvorrichtung (21) an eine Steuervorrichtung (17) angeschlossen ist, wobei die Steuervorrichtung (17) mit einer Lesevorrichtung (18) zum Auslesen der ersten bzw. zweiten Datenträger (31; 32) verbindbar ist, wobei die Steuervorrichtung (17) zur Ausführung eines Verfahrens nach einem der vorstehenden Ansprüche eingerichtet ist.

5. Montagearbeitsplatz nach Anspruch 4,
wobei zumindest ein Teil der Behälteraufnahmevorrichtungen (30) jeweils eine erste und eine zweite Behälterlaufbahn (41; 42) aufweist, welche parallel zueinander angeordnet sind, wobei deren Abstand (43) verstellbar ist, wobei im ersten und/oder im zweiten Datenträger (31; 32) eine Information gespeichert ist, aus der der Abstand zwischen der ersten und der zweiten Behälterlaufbahn (41; 42) ableitbar ist.

6. Montagearbeitsplatz nach Anspruch 4 oder 5,
wobei alle Behälterlaufbahnen parallel zu einer vertikalen Bezugsebene (15) angeordnet sind.

7. Montagearbeitsplatz nach Anspruch 5 oder 6,
wobei wenigstens eine Bildprojektionsvorrichtung (20) vorgesehen ist, wobei an einer dem Werker zugewandten Stirnfläche der ersten Behälterlaufbahn (41) eine Projektionsfläche (46) für ein Bild der Bildprojektionsvorrichtung (20) angeordnet ist.

8. Montagearbeitsplatz nach einem der Ansprüche 5 bis 7,
wobei der erste Datenträger (31) an einer dem Werker zugewandten Stirnfläche der zweiten Behälterlaufbahn (42) angeordnet ist.

9. Montagearbeitsplatz nach einem der Ansprüche 5 bis 8,
wobei wenigstens ein Werkzeug (23) vorgesehen ist, wobei eine zweite Positionsbestimmungsvorrichtung (22) vorgesehen ist, mit welcher der Ort und/oder die Drehlage des Werkezugs (23) ermittelbar ist, wobei die erste und die zweite Positionsbestimmungsvorrichtung (21; 22) unterschiedlich voneinander ausgebildet sind.

10. Verfahren zum Betrieb eines Montagearbeitsplatzes nach einem der Ansprüche 5 bis 9,
wobei unter Verwendung der ersten Positionsbestimmungsvorrichtung (21) und der gespeicherten Referenzposition und der gespeicherten ersten und zweiten Daten ermittelt wird, ob der Werker mit seiner Hand in den zugeordneten Materialbehälter (33) gegriffen hat oder nicht.

11. Verfahren zum Betrieb eines Montagearbeitsplatzes nach einem der Ansprüche 7 bis 9,
wobei mittels der wenigstens einen Bildprojektionsvorrichtung (20) ein vorgegebenes Bild auf eine zugeordnete Projektionsfläche (46) projiziert wird, wobei unter Verwendung der der Projektionsfläche (46) zugeordneten und gespeicherten Referenzposition und der ersten und zweiten Daten ausgehend vom vorgegeben Bild ein verzerrtes Bild ermittelt wird, welches an die Bildprojektionsvorrichtung (20) übermittelt wird.

12. Montagearbeitsplatz nach einem der Ansprüche 4 bis 9, wobei die Steuervorrichtung zur Ausführung eines Verfahrens nach Anspruch 10 oder 11 eingerichtet ist.

## Claims

1. Method for configuring an assembly workstation (10), wherein the assembly workstation (10) comprises multiple container receptacle devices (30), which are each designed for receiving at least one associated material container (33), wherein multiple container receptacle devices (30) are provided with a first data carrier (31), wherein multiple material containers (33) are provided with a second data carrier (32), wherein a first position determination device (21) is provided, using which the position of a hand of a worker or a marking connectable to said hand is ascertainable, wherein the first position determination device (21) is connected to a control device (17), wherein the method comprises the following steps, which are executed in any arbitrary sequence:
a) touching a reference point (34) on a container receptacle device (30) using the hand of the worker and capturing a corresponding reference position using the first position determination device (21);
b) reading out first data from the first data carrier (31) associated with the reference point (34); and
c) reading out second data from the second data carrier associated with the reference point (34);
wherein the reference position, the first data, and the second data are stored.

2. Method according to Claim 1,
wherein the method is carried out for all container receptacle devices (30) in which at least one material container (33) is received.

3. Method according to any one of the preceding claims,
wherein the reference position, the first data, and the second data are stored in a common data set such that they are analyzable together.

4. Assembly workstation comprising multiple container receptacle devices (30), which are each designed for receiving at least one associated material container (33), wherein each container receptacle device (30) is provided with a first data carrier (31), wherein each material container (33) is provided with a second data carrier (32), wherein a first position determination device (21) is provided, using which the position of a hand of a worker or a marking connectable to said hand is ascertainable, wherein the first position determination device (21) is connectable to a control device (17), wherein the control device (17) is connectable to a read device (18) for reading out the first and/or second data carrier (31; 32), wherein the control device (17) is configured for executing a method according to any one of the preceding claims.

5. Assembly workstation according to Claim 4,
wherein at least a part of the container receptacle devices (30) each have a first and a second container runway (41; 42), which are arranged in parallel to one another, wherein the spacing (43) thereof is adjustable, wherein an item of information is stored in the first and/or the second data carrier (31; 32), from which the spacing between the first and the second container runway (41; 42) is derivable.

6. Assembly workstation according to Claim 4 or 5,
wherein all container runways are arranged in parallel to a vertical reference plane (15).

7. Assembly workstation according to Claim 5 or 6,
wherein at least one image projection device (20) is provided, wherein a projection surface (46) for an image of the image projection device (20) is arranged on an end face, which faces toward the worker, of the first container runway (41).

8. Assembly workstation according to any one of Claims 5 to 7,
wherein the first data carrier (31) is arranged on an end face of the second container runway (42) facing toward the worker.

9. Assembly workstation according to any one of Claims 5 to 8,
wherein at least one tool (23) is provided, wherein a second position determination device (22) is provided, using which the position and/or the rotational orientation of the tool (23) is ascertainable, wherein the first and the second position determination devices (21; 22) are designed differently from one another.

10. Method for operating an assembly workstation according to any one of Claims 5 to 9,
wherein it is ascertained, using the first position determination device (21) and the stored reference position and the stored first and second data, whether the worker has reached with his hand into the associated material container (33) or not.

11. Method for operating an assembly workstation according to any one of Claims 7 to 9,
wherein a predefined image is projected onto an associated projection surface (46) by means of the at least one image projection device (20), wherein, using the stored reference position, which is associated with the projection surface (46), and the first and second data, a distorted image, which is transmitted to the image projection device (20), is ascertained proceeding from the predefined image.

12. Assembly workstation according to any one of Claims 4 to 9, wherein the control device is configured to execute a method according to Claim 10 or 11.

## Revendications

1. Procédé de construction d'un poste de montage (10), le poste de montage (10) présentant plusieurs ensembles (30) de reprise de récipient configurés pour reprendre chacun au moins un récipient (33) à matière qui leur est associé,
plusieurs ensembles (30) de reprise de récipient étant dotés d'un premier support de données (31), plusieurs récipients (33) à matière étant dotés d'un deuxième support de données (32),
un premier ensemble (21) de détermination de position par lequel la position de la main d'un travailleur ou d'un repère pouvant être relié à ladite main peut être déterminée étant prévu, le premier ensemble (21) de détermination de position étant raccordé à un ensemble de commande (17), le procédé comportant les étapes ci-dessous qui sont exécutées en succession quelconque :
a) un point de référence (34) d'un ensemble (30) de reprise de récipient est touché par la main du travailleur et une position de référence correspondante est saisie par le premier ensemble (21) de détermination de position,
b) des premières données sont lues dans le premier support de données (31) associé au point de référence (34) et
c) des deuxièmes données sont lues dans le deuxième support de données associé au point de référence (34), la position de référence, les premières et les deuxièmes données étant conservées en mémoire.

2. Procédé selon la revendication 1, dans lequel le procédé est exécuté pour tous les ensembles (30) de reprise de récipient dans lesquels au moins un récipient (33) à matière est repris.

3. Procédé selon l'une des revendications précédentes, dans lequel la position de référence, les premières et les deuxièmes données sont conservées dans un jeu de données commun de manière à pouvoir être évaluées ensemble.

4. Poste de montage présentant plusieurs ensembles (30) de reprise de récipient configurés pour reprendre chacun au moins un récipient (33) à matière associé, chaque ensemble (30) de reprise de récipient étant doté d'un premier support de données (31), chaque récipient (33) à matière étant doté d'un deuxième support de données (32), un premier ensemble (21) de détermination de position permettant de déterminer la position de la main d'un travailleur ou d'un repère qui peut être relié à ladite main étant prévu, le premier ensemble (21) de détermination de position étant raccordé à un ensemble de commande (17), l'ensemble de commande (17) pouvant être relié à un ensemble de lecture (18) qui lit les premiers ou les deuxièmes supports de données (31; 32), l'ensemble de commande (17) étant conçu pour exécuter un procédé selon l'une des revendications précédentes.

5. Poste de montage selon la revendication 4, dans lequel au moins une partie des ensembles (30) de reprise de récipient présente une première et une deuxième piste (41; 42) de déplacement de récipient qui disposées parallèlement l'une à l'autre et dont l'écartement (43) peut être ajusté, une information à partir de laquelle l'écart entre la première et la deuxième piste (41; 42) de déplacement de récipient peut être déduite étant conservée dans le premier et/ou le deuxième support de données (31; 32) .

6. Poste de montage selon les revendications 4 ou 5, dans lequel toutes les pistes de déplacement de récipient sont disposées parallèlement à un plan de référence vertical (15).

7. Poste de montage selon les revendications 5 ou 6, dans lequel au moins un ensemble (20) de projection d'image est prévu, une surface de projection (46) prévue pour une image de l'ensemble (20) de projection d'image étant disposée sur une surface frontale, tournée vers le travailleur, de la première piste de déplacement (41).

8. Poste de montage selon les revendications 5 à 7, dans lequel le premier support de données (31) est disposé sur une surface frontale, tournée vers le travailleur, de la deuxième piste de déplacement (42).

9. Poste de montage selon les revendications 5 à 8, dans lequel au moins un outil (23) est prévu, un deuxième ensemble (22) de détermination de position par lequel la position et/ou la position en rotation de l'outil (23) peut être déterminée étant prévu, le premier et le deuxième ensemble (21; 22) de détermination de position étant configurés différemment.

10. Procédé de gestion d'un poste de montage selon l'une des revendications 5 à 9, dans lequel on détermine si la main du travailleur a pénétré ou non dans le récipient (33) à matière associé en recourant au premier ensemble (21) de détermination de position, à la position de référence conservée en mémoire et aux premières et aux deuxièmes données conservées en mémoire.

11. Procédé de gestion d'un poste de montage selon l'une des revendications 7 à 9, dans lequel , une image prédéterminée est projetée sur une surface de projection (46) associée au moyen du ou des ensembles (20) de projection d'image et dans lequel une image déformée qui est transmise à l'ensemble (20) de projection d'image est déterminée à partir de l'image prédéterminée par recours à la position de référence associée à la surface de projection (46) conservée en mémoire ainsi qu'aux premières et aux deuxièmes données.

12. Procédé de gestion d'un poste de montage selon l'une des revendications 4 à 9, dans lequel l'ensemble de commande est conçu pour mettre en oeuvre un procédé selon les revendications 10 ou 11.
